# EUROPEAN PATENT APPLICATION

(11) **EP 4 108 351 A1**
(43) Date of publication of application: **28.12.2022**
(21) Application number: 20920353.8
(22) Date of filing: 24.11.2020
(51) Int. Cl.: B21B 3/02, B23K 20/04, C21D 8/02, C21D 9/46, C22C 38/00, C22C 38/58, B21B 1/02, B21B 1/38

(54) **DUPLEX-STAINLESS-STEEL-CLAD STEEL SHEET AND METHOD FOR MANUFACTURING SAME**

(30) Priority: 19.02.2020 JP 2020025906
(71) Applicant: JFE Steel Corporation, Tokyo 100-0011 (JP)
(72) Inventor: SAMUSAWA, Itaru, Tokyo 100-0011 (JP); KURONUMA, Yota, Tokyo 100-0011 (JP); SHIMAMURA, Junji, Tokyo 100-0011 (JP)
(74) Representative: Hoffmann Eitle
(86) International application number: PCT/JP2020/043561
(87) International publication number: WO 2021/166353

(57) **Abstract**

Provided are a duplex stainless clad steel plate with excellent corrosion resistance and bonding properties with reduced costs and a method for manufacturing the same. The duplex stainless clad steel plate has a duplex stainless layer as a cladding material on one or both surfaces of a base steel plate, where a chemical composition of the cladding material comprises, in mass%, C ≦0.03%, Si:0.005 to 1.0%, Mn: 0.50 to 7.0%, P≦0.05%, S≦0.01%, N:0.01 to 0.30%, Ni:1.0 to 6.0%, Cr:19.0 to 25.0% and the remainder being Fe and unavoidable impurities, and shear stress at a widthwise end part of the plate is not less than 200 MPa. In the method, an assembled slab for clad rolling having a controlled vacuum degree inside the assembled slab and a surface roughness Ra of a surface to be a bonding interface after rolling between the cladding material and base metal in the assembled slab of 0.1 to 25 µm is hot-rolled by heating to 1050°C to 1200°C, in which a rough rolling is performed at a temperature region of not lower than 1000°C with a maximum rolling reduction ratio per one pass of not less than 1.04.

## Description

### Technical Field

This invention relates to a duplex stainless clad steel plate used, for example, for seawater desalination equipment, tanks in transport ships, various vessels, and so on, and a method for manufacturing the same.

### Background Art

Duplex stainless steel has been used under high-chloride environments such as seawater or the like or under severe corrosive environments such as oil wells, gas wells, or the like. Concretely, duplex stainless steel is adopted in pipes in oil wells or gas wells, structural members of flue-gas desulfurization equipment, effluent treatment facilities, and seawater lifting generators, paper-making rolls, centrifugal machines, pumps, valves, and heat exchangers, and so on. The duplex stainless steel has a complex microstructure comprising austenite phase and ferrite phase and possesses both excellent corrosion resistance and excellent strength property. It is generally known that the duplex stainless steel has the most excellent corrosion resistance when the area fraction of the austenite phase to ferrite phase (phase fraction) is nearly 1:1. Therefore, the practical chemical composition of the duplex stainless steel is defined so as to allow an area fraction (phase fraction) of the austenite phase to ferrite phase to be in the above-mentioned range. From such a viewpoint, SUS821L1, SUS323L, SUS329J1, SUS329J3L, SUS329J4L, and so on are standardized as rod material or plate material by the Japanese Industrial Standards (JIS). Also, SUS329J1FB is standardized as a forged steel product and SCS10 and the like are standardized as a cast steel product.

On the other hand, the prices of alloying elements of major elements of duplex stainless steel, such as Cr, Ni, and Mo, sometimes soar and largely vary. Therefore, the superior corrosion resistance of duplex stainless steel can be utilized more economically when the duplex stainless steel is used as clad steel rather than as a solid material having the same thickness as the clad steel.

Clad steel plates are formed by bonding two or more kinds of steel plates with different properties, for example, formed by bonding a base metal steel plate made of so-called ordinary steel material such as carbon steel to a cladding material of a high-alloy steel plate showing a high corrosion resistance. Such a clad steel plate is formed by metallurgically bonding different kinds of metals and, unlike plating, has no risk of stripping. Moreover, the clad steel plate can have properties that cannot be achieved with a solid metal or alloy.

For example, by selecting, as the cladding material, steel material that has corrosion resistance corresponding to the environment of use, the clad steel can secure corrosion resistance equal to that of a single material while suppressing the consumption of costly alloying elements. Also, high-strength and high-toughness carbon steel and low-alloy steel can be applied as the base metal plate. Thus, the clad steel plate can obtain corrosion resistance equal to that of a solid material while suppressing the used amount of the expensive alloying elements and also secure strength and toughness equal to those of carbon steels and low-alloy steels, having an advantage in both of economic efficiency and functionality.

Therefore, the clad steel plates using high-alloy steel material as the cladding material are considered to be very useful and functional steel material and have been recently demanded in various industrial fields.

As a technique relating to such clad steel plates, particularly duplex stainless clad steel plates, Patent Literature 1 discloses a duplex stainless clad steel in which CPT (= 2.5Cr + 7.6Mo + 31.9N - 41.0) of the cladding material is within a range of 50 to 60°C. Also, Patent Literature 2 discloses a duplex stainless clad steel in which PI (= Cr + 3.3Mo + 16N) is within a range of 34.0 to 38.0 and the shear stress of the bonding interface between the cladding material and base metal is not less than 200 MPa. Patent Literature 3 discloses a duplex stainless clad steel plate comprising duplex stainless steel having such a chemical component that PREN_Mn (= Cr + 3.3 ( Mo + 0.5W ) + 16N - Mn) of the cladding material is 25 to 40 and having shear strength of the bonding interface between the base metal and cladding material being not less than 350 MPa by controlling hydrogen amount contained in the base metal and the cladding material.

### Citation List

### Patent Literature

Patent Literature 1: JP-A-2014-114466
Patent Literature 2: JP-A-2018-119186
Patent Literature 3: WO 2019/189871

### Summary of Invention

### Technical Problem

However, the above prior arts have problems to be still solved as follows.

In the duplex stainless clad steel disclosed in Patent Literatures 1 and 2, it is necessary to add large amounts of alloys to the duplex stainless steel as the cladding material in order to satisfy CPT or PI as an indication of corrosion resistance. That is, since the alloy cost is high, they cannot meet the need for duplex stainless clad steel material for members intended for use under a milder corrosion environment, concretely members requiring corrosion-resistant performance corresponding to SUS304 or SUS316L.

The clad steel materials disclosed in Patent Literatures 2 and 3 are sure to have sufficient bonding properties and can be put into practical use as the clad steel materials. However, there is no consideration for the bonding properties at the widthwise end parts of the plates. Although a rolled clad steel material is bonded through plastic deformation by rolling, the widthwise end parts of the plate, which hardly cause plastic deformation but are likely to generate an oxide, may not be finally bonded. The poor bonding at the widthwise end parts of the plate brings about a considerable decrease in the yield, causing an increase in the costs of the clad steel material.

That is, in order to manufacture a duplex stainless clad steel material at low costs, it is required to reduce the addition amounts of alloys into the cladding material and improve the yield by improving bonding properties at widthwise end parts.

The invention is developed in consideration of the above situation, and the purpose is to provide a clad steel plate that uses, as a cladding material, duplex stainless steel containing reduced amounts of alloying elements while maintaining corrosion resistance. The duplex stainless clad steel plate has high bonding properties, including the widthwise end parts, and is excellent in production costs, including the yield. The purpose is also to propose a method for manufacturing the duplex stainless clad steel plate.

### Solution to Problem

A duplex stainless clad steel plate according to the invention developed to solve the above problem and attains the purpose is characterized in that the duplex stainless clad steel plate includes
a base metal and
a cladding material of a duplex stainless steel layer formed on at least one side of a base steel plate as the base metal, in which
the chemical composition of the cladding material comprises, by mass%, C: not more than 0.03%, Si: 0.005 to 1.0%, Mn: 0.50 to 7.0%, P: not more than 0.05%, S: not more than 0.01%, N: 0.01 to 0.30%, Ni: 1.0 to 6.0%, Cr: 19.0 to 25.0% and the remainder being Fe and unavoidable impurity, and
a shear stress in a bonding interface between the cladding material and the base metal at a widthwise end part of the plate is not less than 200 MPa.

The duplex stainless clad steel plate according to the invention is considered to have a more preferable solution to the problem that the chemical composition of the cladding material further includes, by mass%, at least one element group selected from
Group A: at least one selected from Cu: 0.01 to 2.00%, Co: 0.01 to 2.00%, W: 0.01 to 1.50%, and Mo: 0.01 to 1.50%,
Group B: Al: 0.001 to 0.05%,
Group C: at least one selected from Ti: 0.01 to 0.25%, Nb: 0.01 to 0.25%, and V: 0.01 to 0.25%, and
Group D: at least one selected from B: 0.0003 to 0.0050%, Ca: 0.0003 to 0.0050%, Mg: 0.0003 to 0.0050%, and REM: 0.0005 to 0.1%.

A method for manufacturing a duplex stainless clad steel plate according to the invention developed to solve the above problem and attain the purpose is characterized in that the method comprising
forming an assembled slab for clad rolling by using any one of the aforementioned cladding materials as a raw material to have a vacuum degree of not more than 5×10⁻² torr and a surface roughness of a face to be a bonding interface between a base metal and cladding material after rolling of 0.1 to 25 µm as an arithmetic average roughness Ra defined in JIS B0601: 2013,
heating the assembled slab for clad rolling to 1050°C to 1200°C, and
hot rolling the assembled slab for clad rolling in which a rough rolling with a maximum rolling reduction ratio per one pass of not less than 1.04 is conducted in a temperature region of not lower than 1000°C,
where the rolling reduction ratio is a value determined by dividing the plate thickness before the rolling by that after the rolling.

### Advantageous Effects of Invention

As described above, according to the duplex stainless clad steel plate and the method for manufacturing the same of the invention, it is possible to manufacture a duplex stainless clad steel plate having sufficient corrosion resistance equal to or more than that of SUS304, reduced amounts of alloying elements than those of a conventional duplex stainless clad steel plate, and excellent bonding properties at a widthwise end part, resulting in improving a yield and decreasing production costs.

### Description of Embodiment

The inventors have evaluated the influence of each alloying element upon the corrosion resistance of a duplex stainless steel material produced with reduced amounts of alloying elements by using various test materials comprising well-known duplex stainless steel as a base material. According to the result, it is necessary to suppress precipitation of the sigma phase and carbide while securing the corrosion resistance of the base metal itself for the corrosion resistance of the duplex stainless steel material. Concretely, in order to secure the corrosion resistance equal to or more than that of SUS304, it is important to contain optimum amounts of Cr and Ni from the viewpoint of the corrosion resistance of the base metal. It is also important to define an acceptable amount of an impurity element and strictly control the temperature of the steel material in the manufacturing process from the viewpoint of suppressing deterioration caused by the precipitation of the sigma phase and carbide. Furthermore, it has been found that the bonding properties, including that of the widthwise end parts, of the rolled clad steel material can be secured by properly controlling the vacuum degree at the stage of forming the assembled slab for clad rolling, the surface roughness of the slab, and the rolling reduction ratio (= (plate thickness before rolling) ÷ (plate thickness after rolling)) per one pass in the rough rolling, and hence the invention has been accomplished.

The invention will be described concretely below.

First of all, the reason for defining the chemical composition of the cladding material according to the invention will now be described. Note that the units in the chemical composition are all "mass%" and are simply represented by "%" unless otherwise noted.

### C: not more than 0.03%

C is an element inevitably present in steel material. When the C content exceeds 0.03%, precipitation of carbide occurs remarkably to deteriorate the corrosion resistance. Therefore, the C content is not more than 0.03%. Preferably, it is not more than 0.02%.

### Si: 0.005 to 1.0%

Si is an element industrially useful for deoxidation and the lower limit of Si content is 0.005%. However, when the Si content exceeds 1.0%, toughness and weldability deteriorate. Therefore, the Si content is not more than 1.0%. Preferably, it is a range of 0.08 to 0.8%.

### Mn: 0.50 to 7.0%

Mn is an element improving strength and toughness. It is also industrially useful for deoxidation. Therefore, Mn is preferably added positively and the lower limit of Mn content is 0.50%. On the other hand, when the Mn content exceeds 7.0%, the corrosion resistance and weldability considerably deteriorate. Therefore, the upper limit of the Mn content is 7.0%. Mn content is preferably in a range of 0.70 to 6.0%, more preferably in a range of 0.80 to 4.0%.

### P: not more than 0.05%

P deteriorates toughness and weldability, and hence the P content should be not more than 0.05%, preferably not more than 0.03%.

### S: not more than 0.01%

As S is a harmful element deteriorating the toughness and weldability of steel, it is desirably decreased to a small content as much as possible. In particular, when S content exceeds 0.01%, the toughness of the base metal and toughness of the welded part become considerably deteriorated. Therefore, the S content is not more than 0.01%, preferably not more than 0.0080%, and more preferably not more than 0.0060%.

### N: 0.01 to 0.30%

N is important as an element for improving strength and corrosion resistance. The N content of at least not less than 0.01% is necessary to produce such an effect. The N content exceeding 0.30% largely deteriorates weldability. Therefore, the N content should be in the range of 0.01 to 0.30%, preferably in the range of 0.02 to 0.25%, and more preferably in the range of 0.03 to 0.25%.

### Ni: 1.0 to 6.0%

Ni is an element stabilizing austenite phase as one phase of duplex stainless steel and improving corrosion resistance to various acids and toughness, and thus the lower limit of the Ni content is 1.0%. As Ni is an expensive element, for use in a low-cost duplex stainless clad steel, it is not preferable to add an excessive amount of Ni from the viewpoint of the alloying costs. The upper limit of Ni content is 6.0%. The Ni content is preferably in the range of 1.2 to 5.5%, more preferably in the range of 1.5 to 5.5%.

### Cr: 19.0 to 25.0%

Cr is an element essential for securing basic corrosion resistance of duplex stainless steel and the lower limit of the Cr content is 19%. On the other hand, when Cr content exceeds 25.0%, the phase fraction of the ferrite phase as the other phase of duplex stainless steel is increased to deteriorate toughness and the corrosion resistance of the welded part. Therefore, the Cr content should be in the range of 19.0 to 25.0%, preferably 20.0 to 24.0%.

Although the basic elements of the cladding materials have been explained above, the following elements may be contained properly if necessary.

Group A: one or more selected from Cu: 0.01 to 2.00%, Co: 0.01 to 2.00%, W: 0.01 to 1.50%, and Mo: 0.01 to 1.50%

Cu is an element for improving corrosion resistance, and the effect thereof develops with a content of not less than 0.01%. However, the Cu content exceeding 2.0% largely deteriorates hot workability. Therefore, when Cu is contained, the content is preferably in the range of 0.01 to 2.00%, more preferably 0.01 to 1.50%.

Co is also an element for improving corrosion resistance, and the effect thereof develops with a content of not less than 0.01%. However, the Co content exceeding 2.00% causes an increase in alloying costs. Therefore, when Co is contained, the content is preferably in the range of 0.01 to 2.00%, more preferably in the range of 0.01 to 1.50%.

W is an element improving corrosion resistance, particularly pitting corrosion resistance, and the effect thereof develops with a content of not less than 0.01%. However, the W content exceeding 1.50% promotes the precipitation of the sigma phase to deteriorate corrosion resistance. Also, W is an expensive metal, and the excessive addition thereof is not preferable from the viewpoint of the alloying costs. Therefore, when W is contained, the content thereof is preferably in the range of 0.01 to 1.50%, more preferably in the range of 0.02 to 1.20%.

Mo is also an element for improving corrosion resistance, particularly pitting corrosion resistance, and the effect thereof develops with a content of not less than 0.01%. However, the Mo content exceeding 1.50% promotes the precipitation of the sigma phase to deteriorate corrosion resistance. Since Mo is also an expensive metal, the excessive addition thereof is not preferable from the viewpoint of alloying costs. Therefore, when Mo is contained, the content thereof is preferably in the range of 0.01 to 1.50%, more preferably in the range of 0.02 to 1.20%.

### Group B: Al: 0.001 to 0.05%

Al is an element effective as a deoxidizing agent, and the Al content should be not less than 0.001%. However, the Al content exceeding 0.05% deteriorates the toughness of the stainless steel. Therefore, the Al content should be in the range of 0.001 to 0.05%.

### Group C: one or more selected from Ti: 0.01 to 0.25%, Nb: 0.01 to 0.25% and V: 0.01 to 0.25%

Ti, Nb, and V are likely to bond to C. When contained in the alloy, these elements can delay the precipitation of carbide such as Cr₂₃C₆ harmful to corrosion resistance. The effect thereof develops with a content of not less than 0.01%. On the other hand, even when the content is more than 0.25%, the effect does not improve any more, increasing the alloying costs. Therefore, when Ti, Nb, and V are contained, each content is preferably in the range of 0.01 to 0.25%, more preferably in the range of 0.01 to 0.20%.

### Group D: one or more selected from B: 0.0003 to 0.0050%, Ca: 0.0003 to 0.0050%, Mg: 0.0003 to 0.0050%, and REM: 0.0005 to 0.1%

One or more of B, Ca, Mg, and REM may be contained to each improve the hot workability of duplex stainless steel. However, the excessive contents of these elements cause the deterioration of toughness in a welded part and a cost increase. Therefore, when these elements are contained, the content of each element is B: 0.0003 to 0.0050%, Ca: 0.0003 to 0.0050%, Mg: 0.0003 to 0.0050%, and REM: 0.0005 to 0.1%.

The elements other than those above are Fe and unavoidable impurities.

As described above, it has been known that duplex stainless steel as being cladding material develops the most excellent corrosion resistance when the phase fraction of the alpha phase to the gamma phase is nearly 1:1. Therefore, each phase fraction of the alpha phase and gamma phase is preferably in the range of 30 to 70% to develop sufficient corrosion resistance. More preferably, it falls within the range of 40 to 60%.

In order to obtain high corrosion resistance, the sum of the phase fractions of the sigma phase and carbide in the precipitates deteriorating corrosion resistance should be not more than 1.0%, more preferably not more than 0.5%. Note that the total of the phase fractions of the alpha phase + gamma phase + sigma phase + carbides sums to 100%. When the sum of the phase fractions of the sigma phase and carbides is zero, the total phase fraction of the alpha phase + gamma phase sums to 100%.

Since the cladding material has corrosion resistance, the base metal of the duplex stainless clad steel plate of the present invention is not particularly limited. Preferably, using low-carbon steel as the base metal allows the duplex stainless clad steel plate to have excellent mechanical properties.

The duplex stainless clad steel plate according to the invention has good bonding properties even in the widthwise end parts and is characterized by having a shear stress of not less than 200 MPa at the bonding interface between the cladding material and the base metal at the widthwise end parts of the plate after the rolling. In particular, plastic deformation hardly occurs in the widthwise end parts, and oxides are likely to generate in the widthwise end part unlike in the center part of the plate, so that it is very important to strictly control the manufacturing conditions of the duplex stainless clad steel plate to secure the bonding properties of the clad steel even in the widthwise end parts.

All of the temperature conditions in the invention are the surface temperature of the raw material or the steel plate. In the invention, also, the widthwise end parts of the plate are defined as a part outside from the 1/8W(width) position and a part outside from the 7/8W (width) position of the clad steel plate after the rolling. Furthermore, the shear stress at the widthwise end parts of the plate is defined as an average value of the shear stress at two positions of an intersection between the center part 1/2L (length) in the longitudinal direction (L) and 1/8W (width) and an intersection between 1/2L (length) and 7/8W (width). Moreover, the bonding properties of the clad steel plate can be evaluated by using a shear strength test in accordance with the prescription of JIS G0601: 2012.

The raw material of the cladding material for the duplex stainless clad steel plate according to the invention can be formed by adjusting to have the above chemical composition and obtained by steelmaking according to the conventional manner or the like. A material for the base metal and the material for the cladding material are used to assemble an assembled slab for clad rolling. For the assembled slab for clad rolling, the configuration of stacking base metal/cladding material/cladding material/base metal in order is efficient in terms of manufacturing. In consideration of warping during cooling, it is desirable that each base metal should have the same thickness and each cladding material should have the same thickness. The assembled slab for clad rolling is preferably sealed by electron beam welding in a pressure-adjusted vacuum chamber. In the above assembling configuration, it is desirable to apply a separating agent such as MgO between the opposing cladding materials. Needless to say, the assembly method should not be limited to that described above. The assembled slab for clad rolling is heated and then subjected to hot rolling.

### Vacuum degree inside assembled slab for clad rolling: not more than 5 × 10⁻² Torr (6.7 Pa)

In order to secure the bonding properties of the rolled clad steel material, it is necessary to decrease the oxide generated in a bonding interface as much as possible. That is, the assembled slab for clad rolling is required to be rolled at a state of sufficiently securing a vacuum degree inside the slab. From this viewpoint, the vacuum degree inside the assembled slab for clad rolling is not more than 5 × 10⁻² Torr (6.7 Pa). It is preferably not more than 2 × 10⁻² Torr (2.7 Pa), more preferably not more than 1 × 10⁻² Torr (1.3 Pa). Various types of vacuum pumps may be applied to achieve a given vacuum degree in the slab. For example, it is preferable to use an oil-sealed rotary vacuum pump and an oil-diffusion pump together.

Surface roughness of base metal and cladding material of assembled slab Ra: 0.1 to 25 µm

From the viewpoint of securing the bonding properties, it is necessary to control the surface roughness of surfaces to be a bonding interface between the base metal and the cladding material in the assembled slab after the rolling. That is, the bonding by clad rolling is a diffusion bonding attained by the contact between newly-formed surfaces of the base metal and the cladding material at a high temperature. Therefore, when the surfaces of the base metal and the cladding material are highly irregular, i.e., when the surfaces are excessively rough, the contact of the newly-formed surfaces with each other becomes difficult, failing to achieve the sufficient contact. On the other hand, when the surface roughness is too low, the anchor effect between the base metal and the cladding material hardly develops, and the contact between the newly-formed faces of the base metal and the cladding material becomes difficult, lowering the bonding properties. From this viewpoint, concretely, the arithmetic average roughness Ra measured according to the definition in JIS B0601: 2013 is necessary to fall within the range of 0.1 to 25 µm. Note that the surface roughness is measured in the widthwise direction of the assembled slab and is preferably in the range of 0.2 to 20 µm, more preferably in the range of 0.3 to 15 µm. The arithmetic average roughness Ra in the invention is an average value of the measurement values of the base metal and cladding material each measured at an arbitrary position of plate width 1/8W or 7/8W. The method of adjusting the surface roughness degree may use, for example, grinding and polishing.

### Heating temperature: 1050 to 1200°C

Since the bonding of the clad steel is performed based on diffusion bonding, the heating temperature is preferable to be higher, and the heating needs to be performed to at least not lower than 1050°C. On the other hand, when the heating temperature exceeds 1200°C, crystal grains in the base metal are coarsened, causing the deterioration in toughness. Excessive heating is not preferable from the viewpoint of an increase in heat source costs. Therefore, the heating temperature should be in the range of 1050 to 1200°C.

Rough rolling with maximum rolling reduction ratio per one pass at temperature region of not lower than 1000°C: not less than 1.04

Rolling in a high-temperature region allows the clad steel to secure bonding properties. The rolling in the high-temperature region is important due to the following reasons. Firstly, the difference in flow stress between the duplex stainless steel as the cladding material and the low alloy steel as the base metal is small enough to form an ideal bonding interface by the rolling. Secondly, interdiffusion of the elements is likely to advance in the interface between the cladding material and base metal in the high-temperature region. Thus, adopting a sufficient rolling reduction ratio in the high-temperature region is advantageous to the bonding. However, even when the total rolling reduction ratio (= (plate thickness before rolling) ÷ (plate thickness after rolling)) is large in the high-temperature region, the bonding at the widthwise end parts of the plate cannot be secured with a small rolling reduction ratio per pass. That is, when the rolling reduction ratio per one pass is small, strain introduced into the assembled slab for clad rolling is concentrated on the surface, while strain is not sufficiently introduced into the contact surface between the cladding material and the base metal in the inside of the assembled slab, failing to sufficiently form a newly-formed face required for the bonding. Especially at the end parts of the plate, strain is concentrated onto the surface of the assembled slab, and as a result, metallic flow in the widthwise direction occurs mainly on the surface of the assembled slab. Accordingly, strong shear also occurs on the interface between the base metal and cladding material at the widthwise end parts of the plate, whereby the bonding is more difficult to be achieved. In order to secure the bonding strength at the widthwise end parts of the plate as the feature of the invention, therefore, it is important to increase the rolling reduction ratio per one pass in the high-temperature region. Hereinafter, the rolling reduction ratio is defined as a value obtained by dividing the plate thickness before rolling by that after rolling per one pass.

To this end, at least one pass rough rolling with the maximum rolling reduction ratio above 1000°C of not less than 1.04 should be conducted. The maximum rolling reduction ratio is preferably not less than 1.05 to secure the bonding properties at the widthwise end parts of the plate.

The hot-rolled plate obtained after the hot rolling may be subjected to a reheating treatment, pickling, and cold rolling to form a cold-rolled plate having a given plate thickness.

The rolling finish temperature of the finish rolling in the hot rolling process is preferably not lower than 700°C. When the rolling finish temperature is lower than 700°C, the flow stress is increased to cause an increase in the rolling load, making the finish rolling difficult.

The cooling method after the hot rolling may be either air cooling or accelerated cooling. In order to obtain higher strength, accelerated cooling is preferable.

The accelerated cooling, when conducted, preferably has a cooling rate of 2 to 100°C/s and a cooling stop temperature of 700 to 400°C. That is, when the cooling rate is less than 2°C/s or the cooling stop temperature exceeds 700°C, the effect of the accelerated cooling is small, possibly failing to achieve the high strength. On the other hand, when the cooling rate exceeds 100°C/s or the cooling stop temperature is lower than 400°C, the toughness of the steel material may lower or strain may be caused in the form of the steel plate. Note that this is not always the case when heat treatment is performed in a later process.

When heat treatment such as tempering or the like is performed in a later process, the temperature is preferable to be 300 to 650°C or 980 to 1150°C, to avoid the deterioration in corrosion resistance due to the precipitation of sigma phase and chromium carbide.

### Examples

The invention will be described with reference to the examples below. Note that the invention should not be limited to these examples.

Steels with chemical compositions shown in Table 1 (the remainder being Fe and unavoidable impurities) were obtained by steelmaking to each form a cladding material, and clad steel was prepared by using the cladding material under the following production conditions. Concretely, an assembled slab for rolling was prepared by using each cladding material under conditions of surface roughness and vacuum degree shown in Table 2. The roughness of the assembled slab to be bonded of the assembled slab was adjusted by polishing. The vacuum degree inside the slab was adjusted by changing an evacuation period with the co-use of an oil-sealed rotary vacuum pump and an oil-diffusion pump. The assembled slab was heated to 1100°C, hot-rolled with a maximum rolling reduction at not lower than 1000°C under conditions shown in Table 2, and finally subjected to hot rolling with a rolling finish temperature of 850°C to form a duplex stainless clad steel plate with a plate thickness of 25 mm (22 mm of the base metal+ 3 mm for the cladding material). Note that cooling after the hot rolling was water cooling (accelerated cooling) with a cooling rate of 10°C/s and a cooling stop temperature of 550°C.

**Table 1-1**

| Steel No. | Chemical composition (mass%) | | | | | | | | | Remarks |
|---|---|---|---|---|---|---|---|---|---|---|
| | C | Si | Mn | P | s | N | Ni | Cr | Other elements | |
| S01 | 0.015 | 0.40 | 1.90 | 0.022 | 0.0066 | 0.15 | 1.1 | 22.5 | | Conforming steel |
| S02 | 0.018 | 0.30 | 0.90 | 0.026 | 0.0057 | 0.17 | 2.2 | 20.8 | | Conforming steel |
| S03 | 0.026 | 0.26 | 3.00 | 0.016 | 0.0066 | 0.29 | 3.9 | 19.2 | | Conforming steel |
| S04 | 0.029 | 0.18 | 1.60 | 0.022 | 0.0075 | 0.04 | 5.9 | 24.8 | | Conforming steel |
| S05 | 0.017 | 0.33 | 0.80 | 0.018 | 0.0060 | 0.08 | 2.5 | 23.6 | Cu:1.00 | Conforming steel |
| S06 | 0.021 | 0.54 | 5.50 | 0.024 | 0.0021 | 0.14 | 3.5 | 23.1 | Co:0.93 | Conforming steel |
| S07 | 0.011 | 0.81 | 5.10 | 0.020 | 0.0031 | 0.18 | 2.8 | 22.6 | W:0.75 | Conforming steel |
| S08 | 0.018 | 0.51 | 4.60 | 0.034 | 0.0063 | 0.12 | 5.1 | 23.2 | Mo:1.02 | Conforming steel |
| S09 | 0.016 | 0.42 | 3.50 | 0.018 | 0.0084 | 0.11 | 2.4 | 22.9 | Cu:0.75, Mo:0.32 | Conforming steel |
| S10 | 0.015 | 0.63 | 2.60 | 0.026 | 0.0060 | 0.22 | 3.4 | 23.9 | Cu:0.52, Co:0.55 | Conforming steel |
| S11 | 0.019 | 0.45 | 1.80 | 0.020 | 0.0063 | 0.17 | 2.7 | 22.5 | Cu:1.20, W:0.42 | Conforming steel |
| S12 | 0.022 | 0.44 | 3.10 | 0.018 | 0.0063 | 0.16 | 3.3 | 23.1 | Co:0.35, W:0.92 | Conforming steel |
| S13 | 0.025 | 0.39 | 2.40 | 0.032 | 0.0054 | 0.23 | 3.4 | 23.2 | Co:0.29, Mo:0.64 | Conforming steel |
| S14 | 0.018 | 0.60 | 4.90 | 0.022 | 0.0063 | 0.14 | 3.8 | 23.6 | W:0.21, Mo:0.29 | Conforming steel |
| S15 | 0.019 | 0.57 | 1.90 | 0.018 | 0.0072 | 0.09 | 2.9 | 23.9 | Cu:0.36, Co:0.28, W:0.36, V:0.05 | Conforming steel |
| S16 | 0.016 | 0.45 | 2.60 | 0.026 | 0.0063 | 0.25 | 3.9 | 24.5 | Cu:0.05, Co:0.41, Mo:0.42, B:0.001 | Conforming steel |

**Table 1-2**

| Steel No. | Chemical composition (mass%) | | | | | | | | | Remarks |
|---|---|---|---|---|---|---|---|---|---|---|
| | C | Si | Mn | P | S | N | Ni | Cr | Other elements | |
| S17 | 0.014 | 0.49 | 2.40 | 0.012 | 0.0063 | 0.21 | 4.2 | 22.9 | Cu:0.51, W:0.05, Mo:0.05, Ca:0.001 | Conforming steel |
| S18 | 0.020 | 0.39 | 2.80 | 0.022 | 0.0036 | 0.15 | 3.1 | 23.6 | Co:0.06, W:0.15, Mo:0.16, Mg:0.001 | Conforming steel |
| S19 | 0.016 | 0.53 | 3.50 | 0.020 | 0.0069 | 0.16 | 3.4 | 24.7 | Cu:0.25, Co:0.19, W:0.25, Mo:0.26, V:0.07, Ca:0.0005 | Conforming steel |
| S20 | 0.017 | 0.55 | 3.60 | 0.026 | 0.0063 | 0.17 | 1.8 | 21.2 | Al:0.02 | Conforming steel |
| S21 | 0.021 | 0.42 | 4.20 | 0.018 | 0.0069 | 0.18 | 1.5 | 20.9 | Ti:0.04, V:0.12, B:0.001 | Conforming steel |
| S22 | 0.017 | 0.64 | 1.70 | 0.022 | 0.0063 | 0.14 | 2.8 | 19.9 | Nb:0.03 | Conforming steel |
| S23 | 0.018 | 0.51 | 0.80 | 0.026 | 0.0045 | 0.16 | 5.3 | 23.4 | Mo:0.89, Al:0.03 | Conforming steel |
| S24 | 0.015 | 0.44 | 2.20 | 0.020 | 0.0060 | 0.18 | 4.5 | 22.6 | Mo:0.95, Nb:0.02 | Conforming steel |
| S25 | 0.016 | 0.46 | 2.90 | 0.018 | 0.0063 | 0.17 | 4.6 | 22.7 | Mo:1.22, Al:0.04, Nb:0.04 | Conforming steel |
| S26 | 0.021 | 0.29 | 2.60 | 0.014 | 0.0062 | 0.15 | 2.7 | 20.1 | REM:0.001 | Conforming steel |
| S27 | 0.018 | 0.44 | 1.51 | 0.026 | 0.0049 | 0.004 | 1.5 | 20.2 | | Comparative steel |
| S28 | 0.016 | 0.46 | 1.60 | 0.018 | 0.0063 | 0.180 | 0.82 | 20.0 | | Comparative steel |
| S29 | 0.015 | 0.62 | 2.60 | 0.020 | 0.0072 | 0.220 | 1.3 | 18.3 | | Comparative steel |
| S30 | 0.021 | 0.55 | 2.45 | 0.018 | 0.0063 | 0.003 | 0.74 | 23.0 | Mo:0.32 | Comparative steel |
| S31 | 0.022 | 0.51 | 6.10 | 0.016 | 0.0021 | 0.004 | 4.6 | 17.4 | Cu:0.45 | Comparative steel |
| S32 | 0.014 | 0.50 | 5.30 | 0.022 | 0.0019 | 0.210 | 0.91 | 17.9 | W:0.54 | Comparative steel |
| S33 | 0.016 | 0.63 | 0.55 | 0.018 | 0.0029 | 0.004 | 0.81 | 17.5 | Al:0.05, Nb:0.02 | Comparative steel |

**Table 2-1**

| Treatment No. | Steel No. | Surface roughness Ra | Vacuum degree inside slab | Maximum rolling reduction ratio per one pass at 1000°C or above | Corrosion resistance | | Bonding properties | | | Remarks |
|---|---|---|---|---|---|---|---|---|---|---|
| | | | | | Rating | CPT | Rating | Shear stress at widthwise end part | Shear stress at center part | |
| | | [µm] | [× 10⁻² Torr] | | | [°C] | | [MPa] | [MPa] | |
| 1 | S01 | 3.5 | 5 | 1.06 | Good | 15 | Good | 209 | 342 | Inventive Example |
| 2 | S02 | 4.2 | 2 | 1.05 | Good | 15 | Good | 225 | 372 | Inventive Example |
| 3 | S03 | 3.6 | 3 | 1.05 | Good | 15 | Good | 219 | 355 | Inventive Example |
| 4 | S04 | 5.9 | 1 | 1.04 | Excellent | 20 | Good | 215 | 319 | Inventive Example |
| 5 | S05 | 8.7 | 0.9 | 1.07 | Excellent | 20 | Good | 222 | 336 | Inventive Example |
| 6 | S06 | 7.9 | 3 | 1.05 | Excellent | 20 | Good | 234 | 340 | Inventive Example |
| 7 | S07 | 4.6 | 0.7 | 1.06 | Excellent | 20 | Good | 254 | 349 | Inventive Example |
| 8 | S08 | 10.5 | 0.5 | 1.04 | Excellent | 20 | Good | 249 | 319 | Inventive Example |
| 9 | S09 | 11.2 | 1 | 1.04 | Excellent | 20 | Good | 231 | 327 | Inventive Example |
| 10 | S10 | 6.7 | 1 | 1.05 | Excellent | 20 | Good | 234 | 330 | Inventive Example |
| 11 | S11 | 3.1 | 1 | 1.04 | Excellent | 20 | Good | 236 | 351 | Inventive Example |
| 12 | S12 | 2.3 | 1 | 1.04 | Excellent | 20 | Good | 244 | 352 | Inventive Example |
| 13 | S13 | 1.3 | 0.7 | 1.05 | Excellent | 20 | Good | 267 | 340 | Inventive Example |
| 14 | S14 | 0.9 | 0.5 | 1.05 | Excellent | 20 | Good | 285 | 368 | Inventive Example |
| 15 | S15 | 1.5 | 1 | 1.05 | Excellent | 20 | Good | 222 | 362 | Inventive Example |
| 16 | S16 | 8.4 | 1 | 1.06 | Excellent | 20 | Good | 226 | 345 | Inventive Example |
| 17 | S17 | 7.9 | 1 | 1.05 | Excellent | 20 | Good | 231 | 342 | Inventive Example |
| 18 | S18 | 6.8 | 1 | 1.05 | Excellent | 20 | Good | 230 | 364 | Inventive Example |
| 19 | S19 | 6.3 | 1 | 1.05 | Excellent | 20 | Good | 218 | 349 | Inventive Example |
| 20 | S20 | 9.9 | 1 | 1.05 | Good | 15 | Good | 220 | 355 | Inventive Example |
| 21 | S21 | 9.1 | 1 | 1.04 | Good | 15 | Good | 227 | 351 | Inventive Example |

**Table 2-2**

| Treatment No. | Steel No. | Surface roughness Ra | Vacuum degree inside slab | Maximum rolling reduction ratio per one pass above 1000°C | Corrosion resistance | | Bonding properties | | | Remarks |
|---|---|---|---|---|---|---|---|---|---|---|
| | | | | | Rating | CPT | Rating | Shear stress at widthwise end part | Shear stress at center part | |
| | | [µm] | [× 10⁻² Torr] | | | [°C] | | [MPa] | [MPa] | |
| 22 | S22 | 6.6 | 1 | 1.06 | Good | 15 | Good | 217 | 329 | Inventive Example |
| 23 | S23 | 5.2 | 0.1 | 1.05 | Excellent | 20 | Good | 233 | 330 | Inventive Example |
| 24 | S24 | 23.6 | 0.01 | 1.05 | Excellent | 20 | Good | 240 | 369 | Inventive Example |
| 25 | S25 | 7.0 | 0.08 | 1.06 | Excellent | 20 | Good | 278 | 346 | Inventive Example |
| 26 | S26 | 6.4 | 1 | 1.06 | Good | 15 | Good | 211 | 319 | Inventive Example |
| 27 | S27 | 6.8 | 2 | 1.05 | Poor | 10 | Good | 222 | 320 | Comparative Example |
| 28 | S28 | 7.8 | 3 | 1.05 | Poor | 10 | Good | 217 | 333 | Comparative Example |
| 29 | S29 | 9.4 | 0.01 | 1.06 | Poor | 10 | Good | 270 | 326 | Comparative Example |
| 30 | S30 | 10.6 | 0.9 | 1.04 | Poor | 10 | Good | 230 | 319 | Comparative Example |
| 31 | S31 | 2.6 | 2 | 1.08 | Poor | 10 | Good | 212 | 336 | Comparative Example |
| 32 | S32 | 5.3 | 3 | 1.04 | Poor | 10 | Good | 215 | 341 | Comparative Example |
| 33 | S33 | 4.5 | 0.1 | 1.04 | Poor | 5 | Good | 243 | 351 | Comparative Example |
| 34 | S01 | 0.08 | 5 | 1.04 | Good | 15 | Poor | 195 | 304 | Comparative Example |
| 35 | S02 | 26.1 | 3 | 1.04 | Good | 15 | Poor | 189 | 292 | Comparative Example |
| 36 | S03 | 12.3 | 7 | 1.04 | Good | 15 | Poor | 190 | 288 | Comparative Example |
| 37 | S04 | 9.8 | 50 | 1.04 | Excellent | 20 | Poor | 171 | 250 | Comparative Example |
| 38 | S05 | 2.0 | 2 | 1.03 | Excellent | 20 | Poor | 114 | 305 | Comparative Example |
| 39 | S06 | 9.2 | 0.01 | 1.02 | Excellent | 20 | Poor | 78 | 332 | Comparative Example |
| 40 | S07 | 2.8 | 0.3 | 1.03 | Excellent | 20 | Poor | 168 | 285 | Comparative Example |
| 41 | S08 | 3.5 | 0.1 | 1.03 | Excellent | 20 | Poor | 171 | 299 | Comparative Example |

A corrosion resistance test of the cladding material was conducted in accordance with the method of ferric chloride tests for stainless steels of JIS G0578: 2000 to determine CPT. Concretely, an immersion test was conducted at a test temperature of 5°C for 72 hours to observe the occurrence of pitting corrosion with a size of not less than 25 µm after the test. When no pitting corrosion was observed, the test was repeated under the condition of raising the test temperature by every 5°C until the pitting corrosion of not less than 25 µm was observed. Note that the temperature at which the pitting corrosion occurred was defined as CPT, which was used to evaluate the corrosion resistance according to the following standards.
Excellent: not lower than 20°C
Good: 15°C
Poor: not higher than 10°C

The bonding properties of the clad steel were evaluated in accordance with a shear strength test described in the test method of clad steel of JIS G0601: 2012. Test specimens were taken out of three positions: an intersection between the center part 1/2L (length) in the longitudinal direction of the clad steel plate and the 1/2W (width) part; an intersection between the center part 1/2L (length) and the 1/8W (width) part; and an intersection between the center part 1/2L (length) and the 7/8W (width) part. The shear stress of the test specimen taken out from the 1/2 (width) part was defined as "shear stress at the center part", and the average value of the shear stresses of the test specimens taken out of the 1/8W (width) part and the 7/8W (width) part was defined as "shear stress at the widthwise end part". The bonding properties were evaluated according to the following standards with respect to the "shear stress at the widthwise end part" and "shear stress at the center part".
Good: both "shear stress at the widthwise end part" and "shear stress at the center part" are not less than 200 MPa
Poor: at least one of "shear stress at the widthwise end part" and "shear stress at the center part" is less than 200 MPa

The obtained results are also shown in Table 2. Table 2 shows that Inventive Examples all have excellent corrosion resistance and bonding properties. On the other hand, Comparative Examples satisfy only corrosion resistance or bonding properties. From the comparison of Inventive Example to Comparative Example, the improvement effect of the invention is obvious.

### Industrial Applicability

The invention possesses excellent corrosion resistance and excellent bonding properties between the base metal and cladding material and attains the reduction of alloying costs and the improvement in yield. Therefore, the invention is preferably applied to various industries such as seawater desalination equipment, tanks in transport boats, various vessels, and so on.

## Claims

1. A duplex stainless clad steel plate comprising
a base metal and
a cladding material of a duplex stainless steel layer formed on at least one side of a base steel plate as the base metal, **characterized in that**
a chemical composition of the cladding material comprises, by mass%, C: not more than 0.03%, Si: 0.005 to 1.0%, Mn: 0.50 to 7.0%, P: not more than 0.05%, S: not more than 0.01%, N: 0.01 to 0.30%, Ni: 1.0 to 6.0%, Cr: 19.0 to 25.0% and the remainder being Fe and unavoidable impurities, and
a shear stress of a bonding interface between the cladding material and the base metal at a widthwise end part of the steel plate is not less than 200 MPa.

2. The duplex stainless clad steel plate according to claim 1, wherein
the chemical composition of the cladding material further contains at least one element group, by mass%, selected from
Group A: at least one selected from Cu: 0.01 to 2.00%, Co: 0.01 to 2.00%, W: 0.01 to 1.50%, and Mo: 0.01 to 1.50%,
Group B: Al: 0.001 to 0.05%,
Group C: at least one selected from Ti: 0.01 to 0.25%, Nb: 0.01 to 0.25%, and V: 0.01 to 0.25%, and
Group D: at least one selected from B: 0.0003 to 0.0050%, Ca: 0.0003 to 0.0050%, Mg: 0.0003 to 0.0050%, and REM: 0.0005 to 0.1%.

3. A method for manufacturing a duplex stainless clad steel plate comprising:
forming an assembled slab for clad rolling by using a cladding material with the chemical composition according to claim 1 or 2 as a raw material to have a vacuum degree of not more than 5×10⁻² Torr and a surface roughness of a face to be a bonding interface between a base metal and cladding material after rolling of 0.1 to 25 µm as an arithmetic average roughness Ra defined in JIS B0601: 2013;
heating the assembled slab for clad rolling to 1050°C to 1200°C; and
hot rolling the assembled slab for clad rolling in which a rough rolling with a maximum rolling reduction ratio per one pass of not less than 1.04 is conducted in a temperature region of not lower than 1000°C,
where the rolling reduction ratio is a value determined by dividing the plate thickness before the rolling by that after the rolling.
